# EUROPEAN PATENT APPLICATION

(11) **EP 4 224 401 A1**
(43) Date of publication of application: **09.08.2023**
(21) Application number: 21875361.4
(22) Date of filing: 22.09.2021
(51) Int. Cl.: G06Q 40/04

(54) **INFORMATION PROCESSING DEVICE, METHOD FOR CONTROLLING INFORMATION PROCESSING DEVICE, AND PROGRAM**

(30) Priority: 29.09.2020 JP 2020162844
(71) Applicant: Kotaeru Holdings Inc., Tokyo 100-6390 (JP)
(72) Inventor: MATSUDA, Yoshinari, Tokyo 100-6326 (JP)
(74) Representative: Murgitroyd & Company
(86) International application number: PCT/JP2021/034772
(87) International publication number: WO 2022/071059

(57) **Abstract**

There is provided a means for utilizing a trust, providing a condition for determining as beneficiary, and being capable of changing the beneficiary when the condition are not fulfilled. The means includes: a first storage means configured to store first trust information that is information regarding that a stock option has been entrusted from a trustor to a first trustee; a determination means configured to determine fulfillment of a determination condition for determining a temporary person to be granted in a trust shown by the first trust information as a beneficiary; and a second storage means configured to store second trust information that is information regarding that the stock option related to the first trust information has been taken over from the first trustee to a second trustee in a case where the determination means determines that the beneficiary determination condition is not fulfilled.

## Description

### Technical Field

The present invention relates to an information processing apparatus, a control method of the information processing apparatus, and a program.

### Background Art

Conventionally, stock options (referred to as "stock option") that grant rights to purchase of a company stocks at an exercise price to officers, employees, or persons concerned (hereinafter referred to as "employee or the like") of the company are known. Since the profit of such stock option increases as a stock price of the stock of the company rises beyond the exercise price, the employee or the like who is given the stock option makes an effort to increase a company value toward a rise in the stock price.

Patent Literature 1 discloses that a securities company lends a fund to an employee or the like as a measure against the inability of the employee or the like to exercise a right of a stock option because the employee or the like who has been granted the stock option cannot prepare a fund at an exercise price. According to this, the employee or the like who cannot exercise the right due to a shortage of the fund obtains a loan, whereby the exercise of the right can be promoted.

### Citation List

### Patent Literature

Patent Literature 1: JP 2005-56095 A

### Summary of Invention

### Technical Problem

Conventionally, who is to be granted the stock option is determined when the stock option is issued. In addition, the exercise price of the stock option is determined according to the stock price when the stock option is granted to the employee or the like. Therefore, between a stock option issued when the stock price is low and a stock option issued after the stock price rises, there is often a large difference in an economic profit (capital gain) obtained when the stock option is actually exercised to acquire a stock and the stock is sold in a market or the like (or the stock option is sold as it is to a third party). However, in a case where, after the stock price rises, the employee or the like who has been granted the stock option when the stock price is low retires, it is difficult to recover the stock option that has been granted to the employee or the like and already has a high economic value from the employee or the like and to regrant the stock option to another employee or the like without causing another employee or the like to pay a consideration of the economic value or a tax on a gift. Eventually, the advantageous stock option issued at the time when the stock price is low is uselessly lost, and there is no choice but to issue a stock option again according to the already risen stock price, and there is room for improvement in the use of the stock option.

In addition, if who is to be granted the stock option is determined at the time of issuing the stock option, the stock option cannot be recovered even in a case where the degree of contribution to the company by the employee or the like is not as expected, and there is room for improvement in the use of the stock option.

The present invention has been made to solve the above problems, and an object of the present invention is to provide a means capable of utilizing a trust, providing a condition for determining as a beneficiary, and changing the beneficiary when the condition is not fulfilled.

### Solution to Problem

The present invention is an information processing apparatus that includes: a first storage means configured to store first trust information that is information regarding that a stock option has been entrusted from a trustor to a first trustee; a determination means configured to determine fulfillment of a determination condition for determining a temporary person to be granted in the trust shown by the first trust information as a beneficiary; and a second storage means configured to store second trust information that is information regarding that the stock option related to the first trust information has been taken over from the first trustee to a second trustee in a case where the determination means determines that the beneficiary determination condition is not fulfilled.

### Advantageous Effects of Invention

According to the present invention, it is possible to provide a means capable of granting a stock option issued by a company to a specific employee or the like temporarily and giving the stock option to another person by using, as a trigger, retirement or a failure to meet expected performance.

### Brief Description of Drawings

Fig. 1 is a block diagram for describing an outline of operation of a stock option management system according to a first embodiment of the present invention.
Fig. 2 is a block diagram showing an outline configuration of a stock option management system 50 according to the first embodiment of the present invention.
Fig. 3 is a block diagram showing a configuration of each information processing apparatus shown in Fig. 2.
Fig. 4 is a diagram showing an example of trust information stored in a storage unit 103 of an information processing apparatus 16a shown in Fig. 2.
Fig. 5 is a flowchart showing processing by the stock option management system 50.
Fig. 6 is a flowchart showing processing of determining fulfillment or non-fulfillment of a beneficiary determination condition for a plurality of temporary persons to be granted in a first trust.

### Description of Embodiments

Hereinafter, embodiments of an information processing apparatus, a method of controlling the information processing apparatus, and a program according to the present invention will be described with reference to the drawings.

### First Embodiment

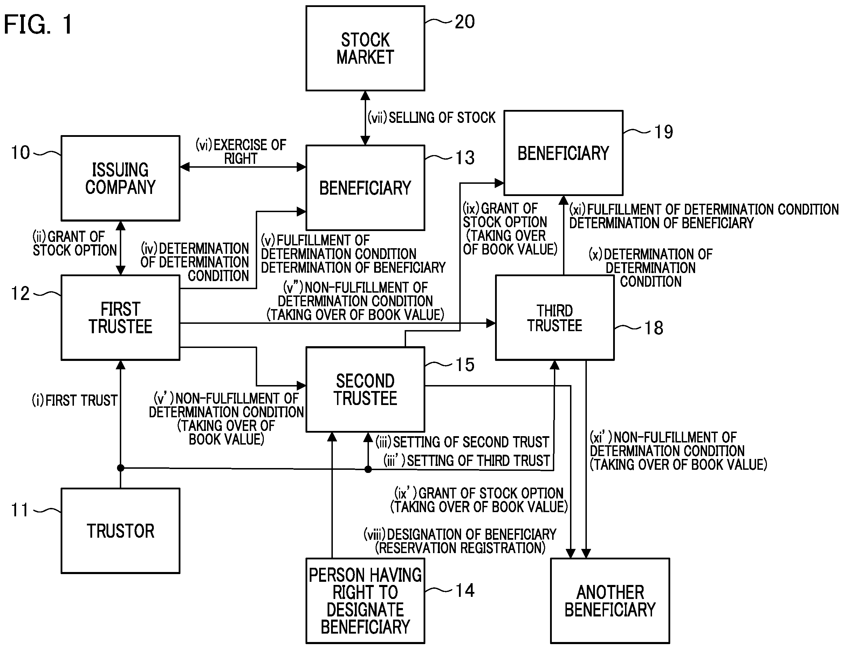

Fig. 1 is a block diagram for describing an outline of operation of a stock option management system according to a first embodiment of the present invention. First, with reference to Fig. 1, a scheme related to management of a stock option in the present embodiment will be described.

Note that, in the present embodiment, the management of a stock option will be described, but the present invention can also be applied to other rights. For example, the present invention can also be applied to a call option management system that manages a call option that is a right to acquire a stock at an exercise price. The stock option is a right to acquire a stock from an issuing company at a current exercise price, but the call option is a right to acquire a stock from a shareholder at an exercise price rather than from an issuing company, and the other party to which a request can be made is different.

In the case of a call option, there is a scheme in which a large shareholder (usually an owner-manager) entrusts the call option in advance so that a temporary person to be granted can acquire a stock owned by the large shareholder when the temporary person to be granted fulfills a beneficiary determination condition (the large shareholder may entrust a call option or may entrust money and be paid money in order to allow a trustee to acquire a call option set by the large shareholder). In addition, the present invention can also be applied to a virtual currency management system that manages a virtual currency. Since a virtual currency is issued by an issuer, and generally has a higher value and therefore has higher liquidity, there is a need to entrust the virtual currency in advance for the purpose of increasing the number of users by distributing the virtual currency to influencers and cooperators (including officers and employees and the like of an issuing corporation.) with the cooperation of these persons. In the case of a virtual currency, there is a scheme in which an issuer or a person who has a large amount of the virtual currency entrusts the virtual currency owned by the issuer or the person with an influencer or a cooperator as a temporary person to be granted in order to deliver the virtual currency only in a case where a certain beneficiary determination condition is fulfilled (the issuer or the person who has a large amount of the virtual currency may entrust the virtual currency or may entrust money or another asset and have a trustee acquire the virtual currency from a trustor or another third party. Furthermore, the present invention can be applied to a limited liability company or a union that is a basis of an investment fund, and a fund share management system that manages the share of a trust. A fund share is held generally by an unlimited liability partner, a limited liability partner, or the like who has formed an investment fund. For example, there is a need to allowing all or part of the share to be passed to an employee or a professional manager to be dispatched to an investment destination in the future, thereby increasing a commitment by the employee, the professional manager, or the like toward improving a corporate value of the investment destination of the investment fund. In the case of a fund share, there is a scheme in which a person who holds the fund share entrusts the fund share owned by the person with a professional manger as a temporary person to be granted in order to deliver the fund share only in a case where a certain beneficiary determination condition is fulfilled (the person who holds the fund share may entrust the fund share or may entrust money or another asset and have a trustee acquire the fund share).

An issuing company 10 is a company that issues a stock option subject to the stock option management system of the present embodiment. A trustor 11 is, for example, a manager or a shareholder of the issuing company 10. Note that the issuing company 10 may make a contribution. The present embodiment covers a trust-type stock option (trust of a stock option issued at a market value (registered trademark)). In the trust type-stock option of the present embodiment, an exercise price (or formula thereof) and the number of stock options to be entrusted are decided at the time of issuance. However, a determined person to be granted is not decided, a specific number of the stock options is temporarily granted to a trustee in the trust, and as the content of the trust, an officer and an employee or the like is decided as a temporary person to be granted, and a beneficiary determination condition that needs to be fulfilled in order for the temporary person to be granted to become a beneficiary is decided (trust with a specified beneficiary). If the temporary person to be granted fulfills the beneficiary determination condition, the temporary person to be granted is a definitive beneficiary and can received the delivery of the stock option as a person to be granted the stock option. A person decided as a person having a right to designate a beneficiary 14 by the trustor 11 may designate who to be set as the temporary person to be granted. In addition, the person having a right to designate a beneficiary 14 may also designate the beneficiary determination condition for determining the temporary person to be granted as a beneficiary. The person having a right to designate a beneficiary 14 (may be the issuing company 10, may be the trustor 11, or may be another person) may decide the temporary person to be granted and the beneficiary determination condition at the time of setting up the trust, for example, according to the degree of contribution to a company, or may decide the temporary person to be granted and the beneficiary determination condition after setting up the trust, for example, according to the degree of contribution to the company or the like. In addition, depending on the trust, the person having a right to designate a beneficiary 14 may set a stepwise beneficiary determination condition at the time of setting up the trust or after setting up the trust, for example, according to the degree of contribution to the company or the like, and link the temporary person to be granted and a number granted to the temporary person to be granted with a stepwise fulfillment status of the beneficiary determination condition. While, in a case where the beneficiary determination condition is fulfilled, the temporary person to be granted is determined as the beneficiary of the trust, in a case where the beneficiary determination condition is not fulfilled, the trustor 11 or the person having a right to designate a beneficiary 14 may determine a person different from the temporary person to be granted as a beneficiary, or the stock option may be taken over to a trustee of another trust by determining the trustee of another trust as a beneficiary at the time of setting up the trust or by designating the trustee of another trust after setting up the trust. Another trust may be a trust for which a temporary person to be granted and a beneficiary determination condition are decided or may be a trust for which a time limit or a condition (cause for designation of a beneficiary) for designating a person having a right to designate a beneficiary and the beneficiary is decided (trust without a specified beneficiary), or another trust may be a trust for which both a time limit and a condition (cause for designation of a beneficiary) for designating a person having a right to designate a beneficiary and the beneficiary are decided.

In a case where another trust is a trust for which a temporary person to be granted and a beneficiary determination condition are decided, when the beneficiary determination condition is not fulfilled, still another person may be further determined as a beneficiary or the stock option may be taken over to a trustee of still another trust by further determining the trustee of still another trust as a beneficiary.

The trustor 11 entrusts the stock option to a trustee (first trustee) 12 of a first trust (first trust). In the present embodiment, the trustor 11 entrusts money to the first trustee 12. Since the transfer of a property by the trust is involved at the time of setting up the trust, a tax is imposed at a predetermined tax rate, if provided by law. Note that the trustor 11 may entrust the stock option and money to the first trustee 12 and pay a tax with the money.

Subsequently, the first trustee 12 pays the entrusted money to the issuing company 10 as a price of the stock option. The issuing company 10 grants the stock option corresponding to the paid price at an acquisition price calculated according to a current stock price to the first trustee 12.

Thereafter, the first trustee 12 continues the management of the entrusted stock option. The trustor 11 decides a temporary person to be granted and a beneficiary determination condition for determining the temporary person to be granted as a beneficiary at the time of setting up the trust. Thereafter, the issuing company 10 determines whether the determination condition is fulfilled or not fulfilled at any time. Note that the first trustee 12 may use money contributed from the trustor 11 or a different trustor or a loan from the temporary person to be granted or a financial institution or the like to exercise a right of the stock option, and acquire and manage a stock during a trust period. In addition, instead of the stock option or the call option, a stock may be entrusted or money may be entrusted, and the trustee 12 may acquire the stock. Furthermore, a virtual currency or a fund share may be entrusted, or money or another asset may be entrusted, and the trustee 12 may acquire the virtual currency or the fund share.

In the present embodiment, for a case where the beneficiary determination condition for a temporary person to be granted is not fulfilled in the first trust, the trustor 11 or a different trustor forms a new trust by contribution of money or the like according to the selection of the trustor 11 or the different trustor (second trust). This second trust may be a trust for which a beneficiary is not specified at the time of setting up, and a person having a right to designate a beneficiary designates a beneficiary due to the occurrence of a cause for designation of a beneficiary (trust without a specified beneficiary). Examples of the cause for designation of a beneficiary of the trust include that the issuing company 10 that was unlisted at the time of setting up the trust is listed, or that a predetermined period has elapsed.

In addition, for a case where the beneficiary determination condition for a certain temporary person to be granted is not fulfilled in the first trust, the trustor 11 or the different trustor may form a new trust with contents different from those of the second trust by contribution of money or the like according to the selection of the trustor 11 or the different trustor (third trust). Examples of contents of the third trust include a trust for which a temporary person to be granted and a beneficiary determination condition different from the temporary person to be granted and the beneficiary determination condition in the first trust are separately decided (trust with a specified beneficiary).

The trustor of the first trust may be different from the trustor of the second trust or the third trust. The trustee (first trustee) 12 of the first trust, the trustee (second trustee) 15 of the second trust, and the trustee (third trustee) 18 of the third trust may be different from one another. In addition, each of the second trust and the third trust may be a single trust or a plurality of trusts. The formation of each of the second trust and the third trust may be before, at the same time with, or after the formation of the first trust. Then, in the first trust, in a case where the beneficiary determination condition for the temporary person to be granted is not fulfilled, if there is a provision as contents of the first trust, another person may be determined as a beneficiary according to the provision. In a case where there is a person decided as a person having a right to designate a beneficiary by the trustor 11 (the person having a right to designate a beneficiary 14), another person may be determined as the beneficiary according to the designation. In this case, the second trustee 15 and/or the third trustee 18 are determined as a beneficiary 13 in the first trust, thereby being able to take over the stock option that is a trust property of the first trust.

As described above, the stock option is taken over to the second trustee 15 at a point of time when the beneficiary determination condition for the temporary person to be granted in the first trust is not fulfilled, whereby a determined beneficiary can be left undetermined until the cause for designation of a beneficiary occurs in the second trust. As a result, for example, when the beneficiary determination condition is not fulfilled due to retirement of the temporary person to be granted in the first trust from the issuing company 10, the second trustee 15 takes over the stock option that is the trust property of the first trust, and thereafter, a person having a right to designate a beneficiary in the second trust designates a beneficiary according to the degree of contribution to the company or the like at a point of time when a cause for designation of a beneficiary occurs, whereby the stock option at the same exercise price as that at the time of setting the first trust can be delivered to an officer and an employee or the like who is employed at that time.

In addition, as described above, the stock option is taken over to the third trustee 18 at a point of time when the determination condition for the temporary person to be granted in the first trust is not fulfilled, whereby the stock option can be delivered to a temporary person to be granted designated in the third trust after fulfillment or non-fulfillment of the beneficiary determination condition for the temporary person to be granted is confirmed in an ex post facto manner without delivering the stock option to a determined beneficiary.

Note that, if provided by law, as for the trust property in a case where the beneficiary determination condition is not fulfilled for the temporary person to be granted in the first trust, the trust property of a designated quantity may be taken over on the basis of a book value at that time as a trust property of the second trust or the third trust (taking over of a book value).
(1) When the beneficiary determination condition is fulfilled for the temporary person to be granted in the first trust, the temporary person to be granted is determined as the beneficiary 13.
(2) When the beneficiary determination condition is not fulfilled for the temporary person to be granted in the first trust, the first trustee 12 may waive all or part of the stock option in trust. In this case, the first trustee 12 may return the stock option to the trustor 11 or the issuing company 10.
(3) When the beneficiary determination condition is not fulfilled for the temporary person to be granted in the first trust, the first trustee 12 may designate the second trustee 15 as a beneficiary for all or part of the stock option in trust.
(4) When the beneficiary determination condition is not fulfilled for the temporary person to be granted in the first trust, the first trustee 12 may temporarily decide a specific person to be granted instead of designating the beneficiary by the method of (2) or (3), for all or part of the stock option in trust, and then may designate, as a beneficiary, a trustee (third trustee 18) in the trust set for the person. In this case, a beneficiary determination condition for determining the temporary person to be granted as a beneficiary 19 in the trust (third trust) set for the temporary person to be granted may be decided in advance, and in a case where the beneficiary determination condition is fulfilled, the temporary person to be granted may become the definitive beneficiary 19 and may be granted the stock option. In addition, in a case where this condition is not fulfilled, taking over to the second trust or the third trust may be performed as described above. In addition, in a case where the beneficiary determination condition is not fulfilled, the third trustee 18 may waive all or part of the stock option. In this case, the stock option may be returned to the trustor 11 or the issuing company 10.

Although not shown in Fig. 1, also in a case where the beneficiary 19 is determined as a beneficiary due to the fulfillment of the beneficiary determination condition in the third trust, the beneficiary 19 can acquire the stock by exercising a right of the stock option to with respect to the issuing company 10 and can sell the stock in a stock market 20, similarly to the beneficiary 13. The first trustee, the second trustee, and the third trustee may exercise the right of the stock option during a period in which the stock option is managed, thereby giving the stock to the beneficiary 13 and the beneficiary 19.

In both cases where the cause for designation of a beneficiary occurs in the second trust and where the condition is not fulfilled in the third trust, the person having a right to designate a beneficiary 14 may designate a next trustee or the same trustee as a beneficiary as in a case where the condition is not fulfilled in the first trust.

If provided by law, the first trustee 12 may have to be a person different from the second trustee 15 or the third trustee 18. In addition, if provided by law, the first trustee 12, the second trustee 15, and the third trustee 18 may be the same person as long as the person has a predetermined qualification. The first trustee 12, the second trustee 15, and the third trustee may be natural persons or may be corporations. In addition, the person having a right to designate a beneficiary (at the time of non-fulfillment of the beneficiary determination condition) in the first trust, the person having a right to designate a beneficiary in the second trust, and the person having a right to designate a beneficiary (at the time of non-fulfillment of the beneficiary determination condition) in the third trust may be different persons or the same person. The person having a right to designate a beneficiary in the first trust, the person having a right to designate a beneficiary in the second trust, and the person having a right to designate a beneficiary in the third trust may be natural persons or corporations.

There is a case where a trustee (including the first trustee 12, the second trustee 15, and the third trustee 18.) who holds the stock option and a beneficiary (including the beneficiary 13 and the beneficiary 19) acquire a stock of the issuing company 10 by exercising a right of the stock option, that is, by paying the exercise price to the issuing company 10. Note that the first trustee 12 may exercise the right of the stock option to acquire the stock and deliver the acquired stock to the beneficiary 13 (including the second trustee 15 and the third trustee 18). In addition, the trustee (including the first trustee 12, the second trustee 15, and the third trustee 18) who hold the stock option and the beneficiary (including the beneficiary 13 and the beneficiary 19) can sell the acquired stock at the stock market 20.

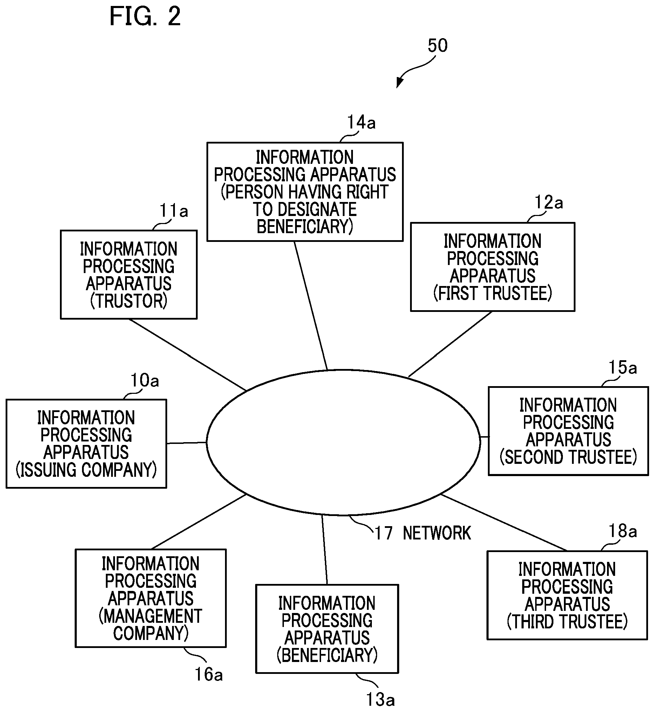

Fig. 2 is a block diagram showing an outline configuration of the stock option management system 50 according to the first embodiment of the present invention. The stock option management system 50 according to the present embodiment is configured by connecting information processing apparatuses 10a, 11a, 12a, 13a, 14a, 15a, 16a, and 18a to one another via a network 17. The stock option management system 50 manages the trusts of the stock option. The stock option management system 50 achieves the scheme described with reference to Fig. 1.

The information processing apparatus 10a is an information processing apparatus operated by a person in charge in the issuing company 10. The information processing apparatus 11a is an information processing apparatus operated by the trustor 11. The information processing apparatus 12a is an information processing apparatus operated by the first trustee 12. The information processing apparatus 13a is an information processing apparatus operated by the beneficiary 13. The information processing apparatus 14a is an information processing apparatus operated by the person having a right to designate a beneficiary 14. The person having a right to designate a beneficiary may be a different person or the same person for each trust such as the first trust, the second trust, and the third trust. Here, the person having a right to designate a beneficiary 14 represents those persons having a right to designate a beneficiary. The information processing apparatus 15a is an information processing apparatus operated by the second trustee 15. The information processing apparatus 16a is an information processing apparatus operated by a person in charge in a management company that manages the stock option management system 50. The information processing apparatus 18a is an information processing apparatus operated by the third trustee 18. The network 17 uses, for example, the Internet, and any known network can be used regardless of whether the network is wired or wireless. The stock option management system 50 may be configured not to include at least one of the information processing apparatuses 10a, 11a, 12a, 13a, 14a, 15a, 16a, and 18a. The stock option management system 50 may include an information processing apparatus other than the information processing apparatuses 10a, 11a, 12a, 13a, 14a, 15a, 16a, and 18a.

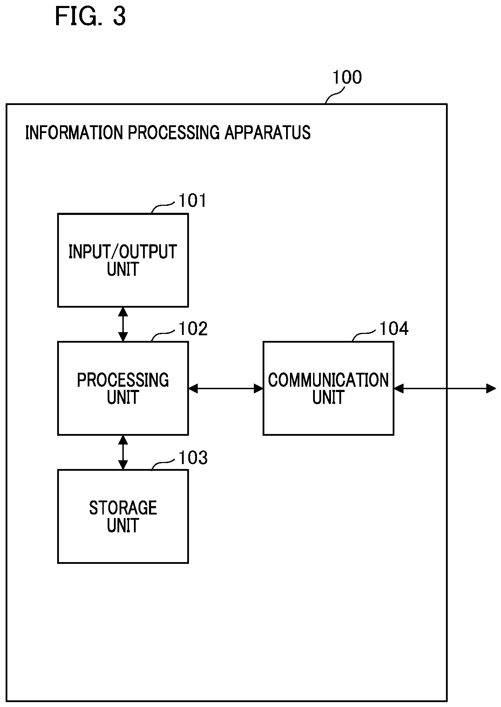

Fig. 3 is a block diagram showing a configuration of each information processing apparatus shown in Fig. 2. In

Fig. 3, configurations of the information processing apparatuses 10a, 11a, 12a, 13a, 14a, 15a, 16a, and 18a shown in Fig. 2 is shown as a configuration of the information processing apparatus 100. The information processing apparatus 100 is at least one of the information processing apparatuses 10a, 11a, 12a, 13a, 14a, 15a, 16a, and 18a. Each of the information processing apparatuses 10a, 11a, 12a, 13a, 14a, 15a, 16a, and 18a may have the same configuration, or may have a configuration different from configurations of the other information processing apparatuses for each information processing apparatus.

The information processing apparatus 100 includes a processing unit 102 that performs various processing, an input/output unit 101 that performs input/output with respect to an operator, a storage unit 103 that stores various data, and a communication unit 104 that performs communication via the network 17. The information processing apparatus 100 is a computer. The information processing apparatus 100 may be any computer. The information processing apparatus 100 may be an apparatus generally called a personal computer or an apparatus called a supercomputer. In addition, the information processing apparatus 100 may be an apparatus called a smartphone or a tablet. The processing unit 102 is an arithmetic device called a central processing unit or a microprocessor unit. The processing unit 102 executes a program stored in the storage unit 103. The processing unit 102 stores various data related to information processing in the storage unit 103. That the information processing apparatus 100 registers information corresponds to that the processing unit 102 stores the information in the storage unit 103. The storage unit 103 may be any known storage device such as a random access memory, a read only memory, a magnetic storage device, or an optical storage device. The input/output unit 101 is an input/output device such as a keyboard, a mouse, and a display. The processing unit 102 executes information processing according to information input by the operator via the input/output unit 101. In addition, the processing unit 102 executes information processing according to information input via the communication unit 104.

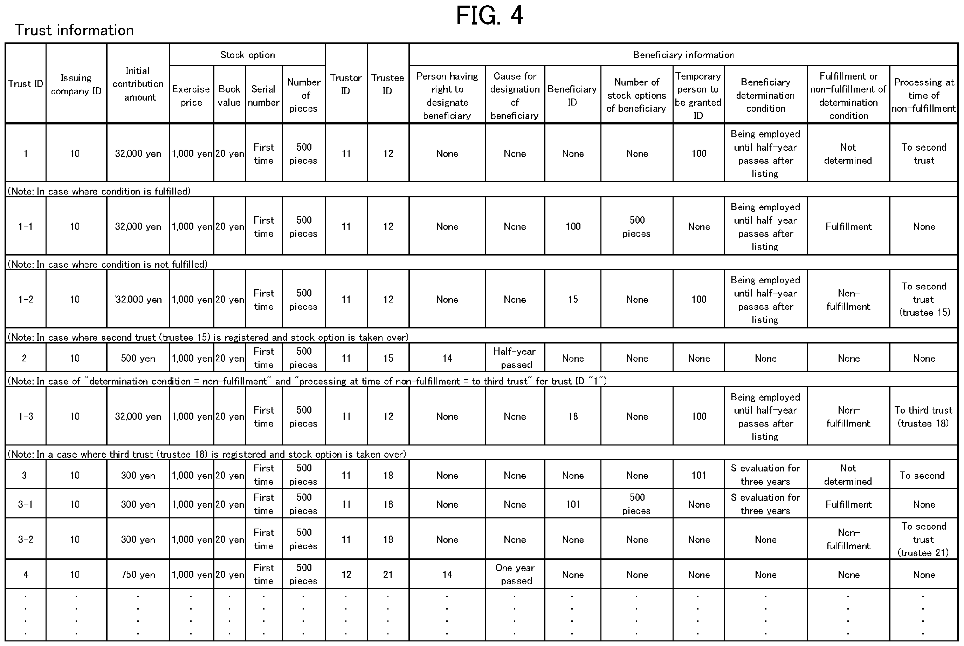

Fig. 4 is a diagram showing an example of trust information stored in a storage unit 103 of the information processing apparatus 16a shown in Fig. 2. In the present embodiment, the trust information is stored in the information processing apparatus 16a operated by the person in charge of the management company that manages the stock option management system 50. The trust information may be stored in another information processing apparatus.

The stock option management system 50 can manage a trust of a stock option in a state in which a temporary person to be granted is determined and a trust of a stock option in a state in which a beneficiary is not determined. In addition, the stock option management system 50 can also manage a trust of a stock option in a state in which a beneficiary is determined.

A trust identification (ID) included in the trust information is an ID capable of identifying each trust and is uniquely assigned to each trust.

A trustor ID included in the trust information is an ID capable of identifying a trustor of the trust.

A trustee ID included in the trust information is an ID capable of identifying a trustee of the trust.

An issuing company ID included in the trust information is an ID capable of identifying an issuing company that issues a stock option of the trust.

An exercise price included in the trust information is an exercise price of the stock option of the trust.

A book value included in the trust information is a paid-in value of the stock option paid when the trustee of the trust receives the grant of the stock option, a market value of the stock option when the trustee of the trust receives the trust of the stock option, or the like.

A serial number of the stock option included in the trust information is a serial number of the stock option that is a trust property of the trust.

The number of the stock options included in the trust information is the number of the stock options that are trust properties of the trust.

A person having a right to designate a beneficiary included in the trust information is an ID capable of identifying a person who has a right to designate a beneficiary of the trust.

A cause for designation of a beneficiary included in the trust information is an event or a due date for designating a beneficiary of the trust.

Beneficiary information included in the trust information is information on the beneficiary of the stock option of the trust. The beneficiary information includes a beneficiary ID. The beneficiary information includes the number of the stock options. The beneficiary information includes a temporary person to be granted ID. The beneficiary information includes a beneficiary determination condition. The beneficiary information includes information related to the fulfillment or non-fulfillment of the beneficiary determination condition and information related to processing in a case where the beneficiary determination condition is not fulfilled. The beneficiary information includes information related to the person having a right to designate a beneficiary and the cause for designation of a beneficiary.

The beneficiary ID included in the beneficiary information is an ID capable of identifying the beneficiary of the stock option of the trust.

The number of the stock options included in the beneficiary information is the number of the stock options granted to the beneficiary. In addition, the number of the stock options is "none" when the beneficiary is not determined.

The temporary person to be granted ID included in the beneficiary information is an ID capable of identifying the temporary person to be granted in a case where the temporary person to be granted who is to be determined as a beneficiary when the determination condition is fulfilled is set.

The beneficiary determination condition included in the beneficiary information shows the presence or absence of a condition for determining a temporary person to be granted as a beneficiary in a case where the beneficiary of the trust is the temporary person to be granted. In a case where there is the beneficiary determination condition, the beneficiary determination condition included in the beneficiary information may include contents of a specific condition. The beneficiary determination condition may include a due date on which the condition is fulfilled. For example, the beneficiary determination condition is designated like being employed in the issuing company 10 until what month of what year, being employed when the issuing company 10 is listed, receiving how many orders of what by what month of what year, or developing what by what month of what year. In a case where there is the beneficiary determination condition, contents related to processing in a case where the beneficiary determination condition is not fulfilled may be included. For example, the contents related to the processing in a case where the beneficiary determination condition is not fulfilled are designated like waiving the stock option, determining a beneficiary by the person having a right to designate a beneficiary, and designating a trustee of another trust as a beneficiary.

A record with a trust ID "1" in Fig. 4 is a record of a trust with a specified beneficiary, and is a record regarding the first trust for which a temporary person to grant determined (temporary person to be granted) without determining a beneficiary and the beneficiary determination condition are decided in the trust information. In this case, information related to the temporary person to be granted is registered as the beneficiary information, but the trustee is registered as the beneficiary. Then, the temporary person to be granted is registered, and furthermore, the beneficiary determination condition and contents related to processing in a case where the beneficiary determination condition is not fulfilled are registered. In this case, it is a trust with a specified beneficiary.

A record with a trust ID "1-1" in Fig. 4 is a record in a case where the beneficiary determination condition is fulfilled for the trust of the record with the trust ID "1" (here, trust with a specified beneficiary). This record shows a pattern in which a beneficiary is determined and the trust is in a termination stage.

A record with a trust ID "1-3" in Fig. 4 shows a pattern in which the trustee in the newly formed third trust (here, trust with a specified beneficiary) is designated as a beneficiary of the stock option and the trust is in a termination stage out of records in a case where the beneficiary determination condition is not fulfilled for the trust of the record with the trust ID "1" (here, trust with a specified beneficiary). In this case, a trust ID of the third trust is newly created together with the formation of the trust, and the information related to the stock option is taken over to the third trust. In this record, the issuing company ID, the exercise price, the book value, and the serial number of the stock option are taken over from the first trust to the next trust. As for the number of the stock options, the number of the stock options to be taken over is registered. Here, there is shown a situation in which a trustee of a trust of a record with a trust ID "3" has taken over all the stock options from the trust ID "1-3".

A record with a trust ID "1-2" in Fig. 4 shows a pattern in which a trustee in the newly formed second trust (here, trust without a specified beneficiary) is designated as a beneficiary of the stock option, and the trust is in a termination stage out of records in a case where the beneficiary determination condition is not fulfilled for the trust of the record with the trust ID "1" (here, trust with a specified beneficiary). In this case, the trust ID of the second trust is newly created together with the formation of the trust, and information related to the stock option is taken over to the second trust. In this record, the issuing company ID, the exercise price, the book value, and the serial number of the stock option are taken over from the first trust to the next trust. As for the number of the stock options, the number of the stock options to be taken over is registered. Here, there is shown a situation in which a trustee of a trust of a record of a trust ID "2" has taken over all the stock options from the trust ID "1-2".

The trust shown as the trust ID "2" in Fig. 4 is a record of a trust without a specified beneficiary in which a person having a right to designate a beneficiary and a cause for designation of a beneficiary are determined. The trust without a specified beneficiary is roughly divided into a trust that simultaneously and collectively designates a beneficiary for all of the stock options entrusted when the a cause for designation of a beneficiary occurs (hereinafter referred to as "collective delivery type trust") and a trust that designates a beneficiary for part of the stock option when a cause for designation of a beneficiary occurs and set a beneficiary related to remaining stock option as a trustee of another trust, thereby delaying the timing of designating the beneficiary related to the remaining stock option (hereinafter referred to as "multiple type trust"). However, these trusts are not different from each other in that a person having a right to designate a beneficiary designates the beneficiary at a point of time when the cause for designation of a beneficiary occurs. Therefore, the trusts are treated in the same way, and records are not separated.

The trust shown as the trust ID "3" in Fig. 4 is a record of a trust with a specified beneficiary in which a temporary person to be granted and a beneficiary determination condition are decided.

The record with the trust ID "3-1" in Fig. 4 is a record related to a trust with a specified beneficiary that is formed on the basis of a provision of the trust with the trust ID "1" in a case where the beneficiary determination condition of the trust ID "1" is not fulfilled (trust for which a temporary person to be granted and a beneficiary determination condition are decided. the trust ID "3"), and the record with the trust ID "3-1" is a record regarding a case where a beneficiary is determined due to the fulfillment of the beneficiary determination condition. This record shows a pattern in which a beneficiary is determined and the trust is in a termination stage.

A record with a trust ID "3-2" in Fig. 4 is a record related to a trust with a specified beneficiary that is formed on the basis of a provision of the trust with the trust ID "1" in a case where the beneficiary determination condition of the trust ID "1" is not fulfilled (trust for which a temporary person to be granted and a beneficiary determination conditions are decided. the trust ID "3"), and the record with the trust ID "3-2" shows a pattern in which a trustee in the newly formed second trust (trust without a specified beneficiary) is designated as the beneficiary of the stock option out of records in a case where the beneficiary determination condition is not fulfilled again. In this case, the trust ID of the second trust is newly created together with the formation of the trust, and information related to the stock option is taken over to the second trust. In this record, the issuing company ID, the exercise price, the book value, and the serial number of the stock option are taken over from the trust with the trust ID "3-2" to the next trust. As for the number of the stock options, the number of the stock options to be taken over is registered.

As described above, the information related to the stock options is taken over from the trust to the next trust each time the beneficiary determination condition is fulfilled or not fulfilled or the cause for designation of a beneficiary occurs until all of the stock options managed in the trust no longer exist due to waiver or extinguishment, or the determination of a beneficiary.

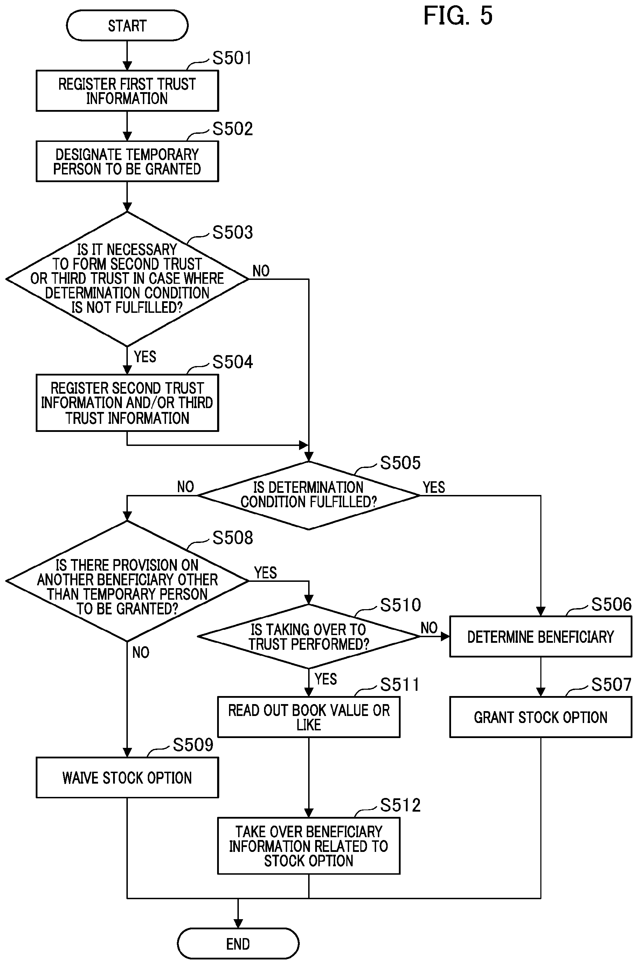

Hereinafter, the operation of the stock option management system 50 of the present embodiment will be described. Fig. 5 is a flowchart showing processing by the stock option management system 50. Processing by the stock option management system 50 may be executed by distributing the processing among the information processing apparatuses 10a, 11a, 12a, 13a, 14a, 15a, and 16a shown in Fig. 2. In addition, for example, the information processing apparatuses other than the information processing apparatus 16a may be used as information input/output terminal apparatuses, and the information processing apparatus 16a may perform information processing and information storage. In the present embodiment, the information processing apparatus 16a performs the information processing and the information storage and provides the other information processing apparatuses with information input/output user interfaces via the network 17.

The information processing apparatus 16a issues each ID included in the trust information in advance and registers each ID. In step S501 of Fig. 5, the information processing apparatus 16a registers each piece of information of trust information in Fig. 4 as first trust information according to the formation of the trust. While the trust continues, the information processing apparatus 16a may calculate a commission or a cost of the trust and execute processing of making a request to the trustor 11 or the issuing company 10.

In step S502, the information processing apparatus 16a registers information regarding the temporary person to be granted designated by the trustor or the person having a right to designate a beneficiary as the beneficiary information of the trust information of Fig. 4.

In step S503, the information processing apparatus 16a determines whether the formation of the second trust or the third trust is necessary in a case where the beneficiary determination condition is not fulfilled as a result of registering the information related to the temporary person to be granted.

In a case where the formation of the second trust and/or the third trust is required in step S503, the information processing apparatus 16a registers each piece of information of the trust information of Fig. 4 as second trust information and/or third trust information in step S504. In step S504, the information processing apparatus 16a proceeds with a procedure of setting up the second trust (trust without a specified benefit) and/or the third trust (trust with a specified beneficiary) to take over the first trust for the stock option for which the beneficiary determination condition is not fulfilled, for example, by separately entrusting money or the like. For example, the information processing apparatus 16a executes processing of proceeding with a process necessary to conclude a contract of the second trust. For example, processing of concluding a trust contract with an electronic signature and processing of outputting a notification for prompting contribution of money to the trustee are executed.

In step S505, the information processing apparatus 16a determines whether the beneficiary determination condition is fulfilled. As for the beneficiary determination condition, the condition is fulfilled, for example, in a case where a person temporarily decided as a person to be granted (temporary person to be granted) makes a predetermined contribution to the issuing company 10. The trustor 11 or the issuing company 10 needs to input whether the beneficiary determination condition is fulfilled to the stock option management system 50. In addition, the trustee or the person having a right to designate a beneficiary 14 may input, into the stock option management system 50, a result of interviewing the trustor 11, the issuing company 10, or the like by the trustee or the person having a right to designate a beneficiary 14.

In a case where the beneficiary determination condition is fulfilled in step S505, a person set as the temporary person to be granted is determined as the beneficiary in the trust set for the person. In step S506, the information processing apparatus 16a registers the temporary person to be granted as the determined beneficiary in the trust information of the trust. The information processing apparatus 16a notifies the trustee that the temporary person to be granted registered in the trust information is a final beneficiary at a point of time when the beneficiary determination condition is fulfilled, whereby the beneficiary is determined.

In addition, in step S507, the information processing apparatus 16a grants the stock option to the determined beneficiary. In other words, the information processing apparatus 16a notifies the trustee (may be the trustee 12 or another trustee.) in the trust set for the person to be granted to grant the stock option to the beneficiary 13 (determined beneficiary).

In a case where the beneficiary determination condition is not fulfilled in step S505, the information processing apparatus 16a determines, in step S508, whether the first trust information includes information to the effect that another person is to be determined to be the beneficiary, information to the effect that a temporary person to be granted and a cause for determination of a beneficiary are to be decided, or information to the effect that a person having a right to designate a beneficiary and a cause for designation of a beneficiary are to be decided in a case where the beneficiary determination condition is not fulfilled. In a case where there are not those pieces of information, the information processing apparatus 16a registers, in step S509, that the trustee waives the stock option and the first trust has been terminated.

In a case where in step S508, the first trust information includes any of the information to the effect that another beneficiary is to be decided, the information to the effect that a temporary person to be granted and a cause of determination of a beneficiary are to be decided, and the information to the effect that a person having a right to designate a beneficiary and a cause for designation of a beneficiary are to be decided, the information processing apparatus 16a determines, in step S510, whether another person is to be determined as a beneficiary or whether takeover to another trust is to be performed.

In a case where in step S510, the information processing apparatus 16a determines that the first trust information includes information to the effect that another person as the beneficiary of the first trust is to be determined as a person to be granted the stock option, the information processing apparatus 16a determines the beneficiary and gives a notification to grant the stock option on the basis of step S506 and step S507 as described above, and registers that the first trust has been terminated.

In a case where in step S510, the information processing apparatus 16a determines the first trust information includes any of the information to the effect that a temporary person to be granted and a cause of specification of a beneficiary are to be decided (trust with a specified beneficiary) and the information to the effect that a person having a right to designate a beneficiary and a cause for designation of a beneficiary are to be determined (trust without a specified beneficiary), the information processing apparatus 16a reads, in step S511, the book value, the number, and the like of the stock option to be taken over from the trust information of the first trust. Subsequently, in step S512, the information processing apparatus 16a registers each piece of information of the trust information in Fig. 4 as the second trust information and/or the third trust information for the trust. A new trust ID is granted to the trust information of the second trust and/or the third trust information. For example, the information processing apparatus 16a uses the book value read out in step S511 as a book value of the trust information of the second trust. The trustee of the second trust may take over the stock option that is the trust property from the first trust as a beneficiary. In step S512, for example, the information processing apparatus 16a registers that regarding the stock option that has not been waived out of the stock option for which the determination condition is not fulfilled and the beneficiary is not determined this time with respect to the trust information, taking over to the trustee of the second trust has been performed and the first trust has been terminated.

Note that, in the above description, the description has been made on the assumption that the temporary person to be granted and the beneficiary determination condition decided in the first trust are one person. However, for example, temporary persons to be granted and beneficiary determination conditions may be decided for a plurality of persons, and in a case where all of these beneficiary determination conditions are not fulfilled, takeover to the trustee of the trust without a specified beneficiary (second trust) in which the person having a right to designate a beneficiary and the cause for designation of a beneficiary are decided may be performed as the second trust.

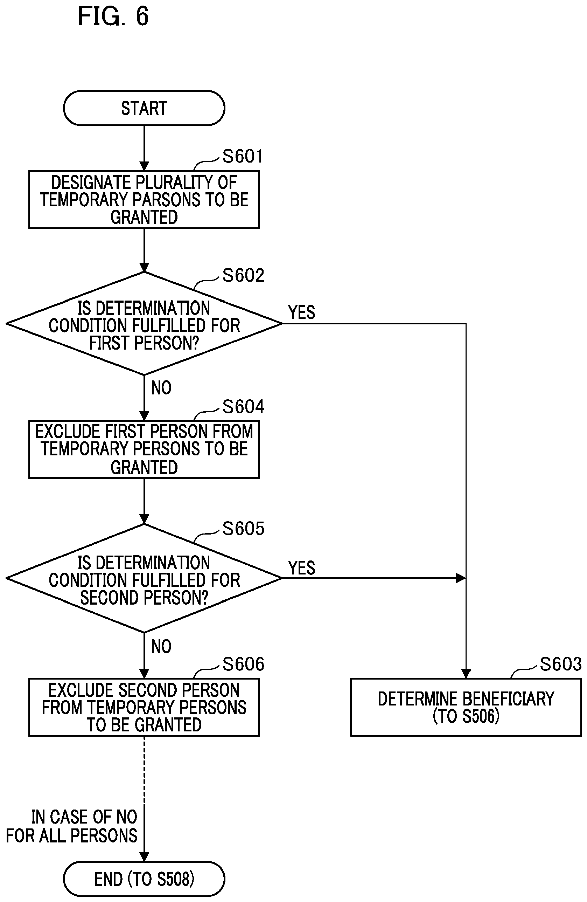

Hereinafter, with reference to Fig. 6, processing of an example of deciding a plurality of temporary persons to be granted will be described.

In step S601, the information processing apparatus 16a registers a plurality of persons to be granted and a benefit determination condition are registered, for example, when the information processing apparatus 16a registers information regarding the temporary person to be granted and the beneficiary determination condition as the beneficiary information of the trust information in Fig. 4 in step S502. In this case, in a case where it is determined in step S602 that the beneficiary determination condition for a first person is not fulfilled, the information processing apparatus 16a further records in step S604 that the beneficiary determination condition for the first person is not fulfilled and reads a second temporary person to be granted and the beneficiary determination condition in subsequent step S605. In this way, in a case where the beneficiary determination condition is not fulfilled for each of all the temporary persons to be granted in the beneficiary information registered in the first trust information, the processing proceeds to step S508, and taking over to a trustee of the next trust is started. In a case where there is a person who fulfills the beneficiary determination condition among these temporary persons to be granted, the case is processed while being regarded as that the beneficiary is determined in step S506 at that time, and processing necessary for granting the stock option is performed in step S603, similarly to step S507.

In the embodiment described above, it has been mainly disclosed that, in a case where the determination condition for the temporary person to be granted is not fulfilled, the second trust is formed, and information on the stock option for which the determination condition has not fulfilled and which has not been waived is passed to the second trust. In the present invention, for example, the information processing apparatus 16a can further execute the following processing.
(1) Processing of prompting the formation of the second trust in a case where the determination condition for the temporary person to be granted is not fulfilled (transition to a contract conclusion process).
(2) In a case where (the contract conclusion process is completed and) the formation of the second trust is completed,
   · processing of executing reservation registration to the effect that the person having a right to designate a beneficiary of the second trust (if any) designates the trustee of the first trust as the beneficiary of the second trust, and
   · processing of accepting a request for executing reservation registration that automatically designates the trustee of the second trust as the beneficiary of the first trust in a case where the temporary person to be granted in the first trust does not fulfill the beneficiary determination condition and does not desire waiver of the stock option, and processing of regarding non-fulfillment of the determination condition for the temporary person to be granted as a notification of designation of a beneficiary at a point of time when the determination condition for the temporary person to be granted is not fulfilled and of taking over information regarding a stock option to be taken over to the second trust out of the stock option for which a cause for designation of a beneficiary has occurred.
(3) Processing of automatically transmitting a transfer approval request, a name transfer request, or a trust property status report necessary as a requirement to duly assert against third parties to the trustor or the issuing company according to the contents of designation of a beneficiary.

In addition, in the present invention, for example, the information processing apparatus 16a can further execute the following processing. For example, in the trust without a specified beneficiary, when the person having a right to designate a beneficiary designates a beneficiary, if "distribute with a condition" is selected (reservation registration),
(1) Processing of automatically prompting creation of the third trust (trust for creation of a dedicated trust account for a specific temporary person to be granted);
(2) After the formation of this trust, processing of regarding that a notification of designation of a beneficiary has been given from the issuing company to the trustee upon occurrence of a cause for designation of a beneficiary; and
(3) Processing of automatically sending a transfer approval request, a name transfer request, or a trust property status report necessary as a requirement to duly assert against third parties to the trustor or the issuing company according to contents of designation of the beneficiary.

In addition, according to the stock option management system 50 of the embodiment described above, the person having a right to designate a beneficiary can select the following according to an information processing apparatus to be operated:
(1) Who is to be unconditionally a beneficiary;
(2) Who is to be conditionally a beneficiary (= whether to form the third trust);
(3) Whether to transfer to the second trust without designating all beneficiaries; and
(4) Whether to waive.

Then, as for the third trust in (2), one trust needs to be created for each person, which causes a drastic increase in the number of formations of trusts. However, the stock option management system 50 includes:
- a means configured to automatically take over trust information of the first trust;
- a means configured to regard reservation registration as a notification of designation of a beneficiary upon expiration of a time limit and to transfer a right; and
- a means configured to automatically create a tax return or a trust property status report for each third trust formed for each person.
- In a case or the like where a plurality of temporary persons to be granted is designated as shown in Fig. 6, the stock option management system 50 includes a means configured to collectively manage the fulfillment or non-fulfillment of a beneficiary determination condition for each temporary person to be granted.

Therefore, the present invention has an effect capable of smoothly achieving processing of trusts and confirmation of fulfillment or non-fulfillment of a condition that are too numerous to be manually executed.

Note that the stock option management system according to the present invention has the following configuration.
(1) A means configured to transmit, to an information processing apparatus operated by a person (the trustor or the issuing company) who has an authority to fill in information related to the fulfillment or non-fulfillment of a beneficiary determination condition, an email or the like prompting the filling in of the information related to the fulfillment or non-fulfillment of the beneficiary determination condition as a determination on the fulfillment or non-fulfillment of the beneficiary determination condition approaches;
(2) A means configured to take over information from the trust information of the first trust to the trust information of the second trust and the third trust (for example, taking over of a book value);
(3) A means configured to make an inquiry to an information processing apparatus operated by the trustor or the person having a right to designate a beneficiary so that the trustor or the person having a right to designate a beneficiary can select any of the following and a means configured to receive a response to the inquiry;
   (i) (waiver)
   (ii) taking over to a new trustee due to formation of the second trust; and
   (iii) taking over to a new trustee for a person to be conditionally granted due to formation of the third trust according to a provision of the first trust in cases other than a case where a temporary person to be granted becomes a beneficiary as a result of the determination of the beneficiary determination condition for the temporary person to be granted;
(4) A means configured to transmit guidance on procedures necessary for formations of the second trust and the third trust to the information processing apparatus operated by the trustor or the person having a right to designate a beneficiary at a timing of forming the second trust and the third trust;
(5) A means that, when the formations of the second trust and the third trust are completed, trustees of the second and third trusts are beneficiaries in a case where the beneficiary determination condition is finally not fulfilled; and
(6) A means configured to generate necessary documents such as a trust property status report and a tax return that become necessary as a result of formation of a new trust, on the basis of trust information and the like,

In addition to differentiating processing according to the fulfillment of the determination condition, the present invention has effects capable of selecting taking over to the second trust (a person to be granted is not determined) and taking over to the third trust (a person to be granted is temporarily determined and there is a determination condition) and capable of increasing the degree of freedom of selection by the trustor and the person having a right to designate a beneficiary.

In addition, the present invention achieves effects that preparation for the next trust (guidance, document generation, and the like) is automated according to a situation of designation of the beneficiary by the trustor and the person having a right to designate a beneficiary, or a situation of the fulfillment of the beneficiary determination condition of the temporary person to be granted, and after the designation of the beneficiary by the beneficiary designation right folder (reservation registration), when the fulfillment or non-fulfillment of the beneficiary determination condition or a cause for designation of a beneficiary occurs, the beneficiary is automatically determined or designated, a property is taken over, and necessary documents are prepared, the present invention has effects of shortening time and reducing a cost.

(1) Note that the present invention includes: a first storage means configured to store the first trust information that is information regarding that the stock option has been entrusted from the trustor to the first trustee; a determination means configured to determine fulfillment of the determination condition for determining a temporary person to be granted in the trust shown by the first trust information as a beneficiary; and a second storage means configured to store the second trust information that is information regarding that the stock option related to the first trust information has been taken over from the first trustee to the second trustee in a case where the determination means determines that the beneficiary determination condition is not fulfilled.

As a result, in a case where the determination condition of the first trust is not fulfilled, the first trust can be continued as the second trust, and the stock option of a quantity corresponding to the degree of contribution to the company or the like can be granted to the employee or the like.

In addition, the present invention may include a means configured to determine the temporary person to be granted as a beneficiary and transfer a name of the holder of the stock option from the name of the trustee to the name of the beneficiary in a case where the determination condition is fulfilled.

In addition, it is after the formation of the second trust or the third trust that the trustee of the second trust or the third trust is designated as the beneficiary of the first trust.

(2) In addition, the present invention includes a reading means configured to read a book value of the stock option related to the first trust information, the book value being included in the first trust information stored in the first storage means, and the second storage means takes over a book value of the stock option related to the second trust information, the book value being included in the second trust information, from the book value read by the reading means, the second storage means being configured to store the book value.

As a result, the second trust can be set at the same book value as that of the first trust, the first trust can be continued as the second trust even after the first trust is terminated, and the stock option of a quantity corresponding to the degree of contribution to the company or the like can be granted to the employee or the like in stages.

Although the preferred embodiments of the present invention have been described above, the present invention is not limited to these embodiments, and various modifications and changes can be made within the scope of the gist of the present invention. These embodiments and modifications thereof are included in the scope and gist of the invention, and are also included in the invention described in the claims and the equivalent scope thereof.

This application claims priority based on Japanese Patent Application No. 2020-162844 filed on September 29, 2020, and the entire contents described in the Japanese patent application are incorporated herein by reference.

### Reference Signs List

- 10: Issuing company
- 11: Trustor
- 12: First trustee
- 13: Beneficiary
- 14: Person having a right to designate a beneficiary
- 15: Second trustee
- 18: Third trustee
- 19: Beneficiary
- 20: Stock market

## Claims

1. An information processing apparatus comprising:
a first storage means configured to store first trust information that is information regarding that a stock option has been entrusted from a trustor to a first trustee;
a determination means configured to determine fulfillment of a determination condition for determining a temporary person to be granted in a trust shown by the first trust information as a beneficiary; and
a second storage means configured to store second trust information that is information regarding that the stock option related to the first trust information has been taken over from the first trustee to a second trustee in a case where the determination means determines that the beneficiary determination condition is not fulfilled.

2. The information processing apparatus according to claim 1, further comprising
a reading means configured to read a book value of the stock option related to the first trust information, the book value being included in the first trust information stored in the first storage means, wherein
the second storage means configured to take over a book value of the stock option related to the second trust information, the book value being included in the second trust information, from the book value read by the reading means, the second storage means being configured to store the book value.

3. A method of controlling an information processing apparatus, the method comprising:
a first storage step of storing first trust information that is information regarding that a stock option has been entrusted from a trustor to a first trustee;
a determination step of determining fulfillment of a determination condition for determining a temporary person to be granted in a trust shown by the first trust information as a beneficiary; and
a second storage step of storing second trust information that is information regarding that the stock option related to the first trust information has been entrusted from the trustor to a second trustee in a case where it is determined in the determination step that the beneficiary determination condition is not fulfilled.

4. A program causing a computer to function as each means included in the information processing apparatus according to claim 1 or 2.
